(19) Europäisches Patentamt
European Patent Office
Office européen des brevets

(11) **EP 1 255 126 B1**

(12) **FASCICULE DE BREVET EUROPEEN**

(45) Date de publication et mention
de la délivrance du brevet:
**26.10.2005 Bulletin 2005/43**

(51) Int Cl.[7]: **G01V 1/28**, G01V 1/30

(21) Numéro de dépôt: **02290996.4**

(22) Date de dépôt: **19.04.2002**

(54) **Méthode pour faciliter le suivi au cours du temps de l'évolution d'états physiques dans une formation souterraine**

Verfahren zur Erleichterung der Zeitüberwachung der Evolution von physikalischen Zuständen in einer unterirdischen Formation

Method of facilitating the time monitoring of the evolution of physical states in a subterranean formation

(84) Etats contractants désignés:
**DK ES GB IT NL PT**

(30) Priorité: **30.04.2001 FR 0105849**

(43) Date de publication de la demande:
**06.11.2002 Bulletin 2002/45**

(73) Titulaire: **Institut Français du Pétrole**
**95852 Rueil-Malmaison cedex (FR)**

(72) Inventeurs:
• **Nivlet, Philippe**
**75014 Paris (FR)**
• **Fournier, Frédérique**
**95240 Cormeilles en Parisis (FR)**

(56) Documents cités:
**US-A- 5 539 704**

• **DUMAY J ET AL: "Multivariate statistical analyses applied to seismic facies recognition" GEOPHYSICS, SEPT. 1988, USA, vol. 53, no. 9, pages 1151-1159, XP002187537 ISSN: 0016-8033**
• **SONNELAND LARS ET AL: "Seismic reservoir monitoring on Gullfaks" LEADING EDGE;LEADING EDGE (TULSA, OK) SEP 1997 SOC OF EXPLORATION GEOPHYSICISTS, TULSA, OK, USA, vol. 16, no. 9, septembre 1997 (1997-09), pages 1247-1252, XP002187538**
• **HAKIL KIM ET AL: "EVIDENTIAL REASONING APPROACH TO MULTISOURCE-DATA CLASSIFICATION INREMOTE SENSING" IEEE TRANSACTIONS ON SYSTEMS, MAN AND CYBERNETICS, IEEE INC. NEW YORK, US, vol. 25, no. 8, 1 août 1995 (1995-08-01), pages 1257-1265, XP000526380 ISSN: 0018-9472**
• **FOURNIER F: "INTEGRATION OF 3D SEISMIC DATA IN RESERVOIR STOCHASTIC SIMULATIONS:A CASE STUDY" SPE ANNUAL TECHNICAL CONFERENCE AND EXHIBITION, XX, XX, 1995, pages 343-356, XP000997171**

## Description

La présente invention concerne une méthode pour faciliter le suivi au cours du temps de l'évolution des états physiques d'une formation souterraine par utilisation et interprétation de données de sismique 4D.

## Etat de la technique

Différents aspects de l'art antérieur dans le domaine considéré sont décrits par exemple dans les publications suivantes :

- Dumay, J., Fournier, F., 1988, "Multivariate statistical analyses applied to seismic facies recognition", Geophysics, 53, n°9, pp. 1151-1159 ;

- Sonneland, L. et al, 1997, « Seismic reservoir monitoring on Gullfalks », The Leading Edge, 16, n°9, pp. 1247-1252 ;

- Ross C. et al « Inside the Crossequalization Blackbox », The Leading Edge, 15 :11, 1996, pp. 1233-1240;

- Kolmogorov A. N., 1950, *Foundation of the Theory of Probability* ; Chelsea Publ. Co., New York ;

- Moore R. E., 1969, *Interval Analysis*: Prenctice-Hall, Englewood Cliffs ;

- Walley P., 1991, *Statistical Reasoning with Imprecise Probabilities:* Monographs on Statistics and Applied Probabilities n. 42, Chapman and Hall, London ;

ainsi que dans les brevets : FR 2 768 818, et FR 2813959.

Les mesures sismiques sont classiquement utilisées pour fournir des informations complémentaires, par rapport aux données des forages, sur les variations des formations du sous-sol : variations lithologiques, pétrophysiques, ou de saturations en fluide. En particulier, dans le cadre de la production des réservoirs d'hydrocarbures, il est devenu fréquent de répéter l'enregistrement des mesures sismiques et d'interpréter alors les variations de la mesure sismique en liaison avec les variations de saturation et de pression dues aux phénomènes de production du réservoir. Cette interprétation se fait souvent par des techniques statistiques de reconnaissance des formes qui permettent de classer les événements sismiques en diverses catégories, traduisant les différents états physiques du réservoir. Ces approches sont décrites, par exemple dans la publication Dumay, J., Fournier F. (1988). Leur application à l'interprétation de la sismique répétée est décrite par exemple, dans la publication Sonneland, L., *et al.* (1997).

Une difficulté de l'interprétation de la sismique répétée - ou sismique 4D - est que la mesure n'est pas parfaitement répétitive. Ainsi, même dans les zones du sous-sol non affectées par la mise en production du réservoir, et dont la réponse sismique devrait être inchangée au cours du temps, on observe des variations sismiques qui ne font que traduire le manque de reproductibilité de la mesure. Les causes en sont nombreuses, citons les variations du signal sismique d'une campagne à l'autre, la variabilité des bruits d'acquisition entre différentes campagnes, le positionnement imprécis des capteurs et des sources sismiques.

Malgré des efforts de retraitement poussé pour homogénéiser les différentes campagnes de mesures avant leur interprétation, par des méthodes décrites dans la publication Ross *et al.* (1996) déjà citée, il reste une non-répétitivité résiduelle qui n'est pas négligeable. Ainsi, au niveau du réservoir, une partie de la variation de la réponse sismique est due à cette non-reproductibilité de la mesure, l'autre partie étant bien sûr reliée aux évolutions physiques du réservoir, suite aux mécanismes de production.

Il est donc très important dans l'interprétation qui est faite de la mesure 4D de prendre en compte cette incertitude inhérente à la mesure, et non reliée aux variations du reservoir. Pour ce faire, nous proposons d'utiliser une technique d'analyse discriminante floue, qui a fait l'objet du brevet FR 2813959 déjà cité, et de l'appliquer à l'analyse des événements sismiques au niveau du reservoir. Au préalable, les incertitudes de mesure, liées à leur reproductibilité imparfaite, auront été évaluées en se servant conjointement des observations sismiques des différentes campagnes, faites en dehors de la zone potentiellement touchée par la production des hydrocarbures.

## La méthode selon l'invention

La méthode selon l'invention et la revendication 1 permet de faciliter l'identification des changements au cours du temps de l'état physique d'une première zone d'une formation souterraine (une zone réservoir par exemple), d'après les changements détectables à l'intérieur d'une première fenêtre temporelle sur plusieurs jeux de traces sismiques obtenues respectivement au cours de campagnes sismiques successives, en tenant compte des incertitudes sur un certain nombre d'attributs sismiques descriptifs, par référence à des parties des traces sismiques des différents jeux enregistrées dans au moins une deuxième fenêtre temporelle correspondant à au moins une deuxième zone de la formation souterraine (hors du réservoir) où la formation ne subit aucune variation significative d'état physique au cours des campagnes sismiques successives. Dans laquelle on utilise une technique d'analyse discriminante pour classer des événements sismiques repérés sur les traces d'enregistrement, dans des catégories définies.

La méthode comprend :

- la formation d'une base d'apprentissage regroupant des états physiques déjà reconnus et classés en catégories prédéfinies, chacune d'elles étant définie par des attributs de caractéristiques statistiques connues ;

- la construction, par référence à la base d'apprentissage, d'une fonction de classement par une technique d'analyse discriminante, permettant de répartir dans les dites catégories, les différents événements sismiques à classer à partir de mesures disponibles sur un certain nombre d'attributs, cette fonction étant formée en déterminant les probabilités d'appartenance des événements aux différentes catégories en tenant compte d'incertitudes sur les attributs sous la forme d'intervalles de probabilité de largeur variable, et

- l'affectation de chaque événement sismique à au moins une des catégories prédéfinies en fonction de l'importance des intervalles de probabilité.

La méthode étant caractérisée en ce que les dites incertitudes intervenant dans la construction de la fonction de classement sont ici des incertitudes traduisant le manque de reproductibilité des attributs sismiques d'une campagne sismique à une autre que l'on obtient par une analyse statistique des variations des attributs des événements sismiques de la deuxième fenêtre temporelle.

Suivant un mode de mise en oeuvre, on forme la base d'apprentissage à partir d'événements sismiques mesurés au voisinage de puits forés au travers de la formation étudiée, en définissant à partir d'elles des classes d'apprentissage correspondant à différentes natures de roche, ou à différents contenus fluides, les différents objets à classer étant associés à des attributs sismiques couvrant la formation, et, pour lesquels, on évalue la probabilité d'appartenance à chacune des classes d'apprentissage définies, sous la forme d'un intervalle dont les bornes dépendent des dits attributs sismiques et des incertitudes sur ces mêmes attributs, et l'on affecte ces objets à au moins une des classes d'apprentissage en fonction de l'importance relative de l'intervalle de probabilité associé par rapport à l'ensemble des intervalles de probabilité.

On peut former la base d'apprentissage en sélectionnant par exemple les traces sismiques dans les parties les plus représentatives des différents états physiques supposés de la première zone, et de leurs variations, obtenus par exemple avec un modèle numérique de simulation d'écoulement et de production.

On peut également former la base d'apprentissage en fonction des modes d'une fonction de densité de probabilité multivariée calculée à partir de l'ensemble des événements sismiques caractérisés par les attributs retenus.

Suivant un mode de mise en oeuvre, on estime les incertitudes sur les attributs sismiques au niveau de la première zone, à partir des variations de la moyenne verticale des variations des attributs sur les différentes campagnes sismiques, dans la dite deuxième fenêtre temporelle.

Il est possible également d'estimer les incertitudes sur les attributs sismiques au niveau de la première zone, à partir de simulations stochastiques tridimensionnelles, afin de reproduire au niveau de la première zone, la variabilité spatiale et des caractéristiques statistiques telles que la moyenne et/ou la variance, estimées par l'analyse géostatistique des variations des attributs sur les différentes campagnes sismiques dans la dite deuxième fenêtre temporelle.

Suivant un mode de mise en oeuvre, on suit l'évolution au cours du temps des états d'un système par télédétection.

La méthode peut comporter si nécessaire un prétraitement des traces sismiques pour éliminer, sur les parties de traces des jeux de traces successifs, compris dans la deuxième fenêtre temporelle, des différences autres que celles liées aux dits changements dans la forme des dits objets.

La prise en compte des incertitudes 4D dans le processus d'interprétation proposé peut aboutir à des catégories d'état physique du réservoir, qui peuvent ne plus être reconnues, si l'incertitude sur les mesures est trop forte, ou bien à plusieurs catégories possibles, et non discernables, compte tenu du niveau des incertitudes. L'interprétation qui est ainsi faite des données de sismique répétée intègre alors complètement l'aspect non reproductible de ce genre de mesure, et les variations aléatoires entraînées au niveau du réservoir ne sont plus interprétées comme des variations physiques de ce réservoir.

## Présentation succincte des figures

D'autres caractéristiques et avantages de la méthode selon l'invention, apparaîtront à la lecture de la description ci-après d'un exemple non limitatif de réalisation, en se référant aux dessins annexés où :

- les Fig.1a à 1c montrent trois volumes d'amplitudes sismiques S1 à S3, enregistrés à trois périodes différentes au niveau d'un réservoir mis en production entre les acquisitions S1 et S2 ;

- les Fig.2a à 2c montrent pour chaque campagne sismique effectuée un volume d'amplitudes sismiques repéré au-dessus de la formation étudiée, correspondant à une zone où aucune modification physique liée à la mise en production du réservoir n'a eu lieu, et servant de base à l'estimation de l'erreur de mesure sismique ;

- la Fig.3 montre la carte des variations horizontales moyennes de l'incertitude de mesure des amplitudes sismiques, correspondant aux différences absolues d'amplitudes constatées entre les trois volumes de données de la Fig.2 ;

- la Fig.4 montre la répartition spatiale des traces sismiques sélectionnées pour calibrer la fonction de classement imprécise, codées en fonction de leur classe d'appartenance ;

- les Fig.5a à 5c montrent les attributions les plus fiables des événements sismiques des trois campagnes de la Fig.1, compte tenu des incertitudes représentées à la Fig.3 ;

- les Fig.6a à 6c montrent pour ces événements attribués de manière fiable, l'incertitude sur la probabilité d'affectation associée au classement ;

- les Fig.7 à 9 montrent l'extension spatiale des attributions fiables (en gris) ou incertaines (en noir) pour 3 faciès sismiques différents (faciès 1 : Fig.7a à 7c, faciès 2 :

- Fig.8a à 8c et faciès 6 : Fig.9a à 9c), ainsi que l'évolution sur les trois campagnes de cette interprétation.

## DESCRIPTION DETAILLEE

Les événements sismiques que l'on cherche à classer sont caractérisés par des attributs - ou paramètres - sismiques. Par exemple, ces paramètres peuvent être la succession des amplitudes le long de la fenêtre sismique étudiée. Ces événements sont extraits simultanément sur les différents enregistrements de la sismique répétée, au niveau d'une zone cible du sous-sol, ou réservoir. La méthodologie de définition des classes basée sur l'analyse discriminante floue comporte quatre étapes :

La première étape consiste à analyser la variabilité statistique des attributs sismiques entre les enregistrements de la sismique 4D, due à la reproductibilité imparfaite de la mesure au cours du temps. Pour cela, on considère sur chaque campagne sismique un volume de données prélevées à l'intérieur de la fenêtre temporelle sur laquelle a été effectuée le retraitement préalable des données, mais suffisamment loin de la zone réservoir pour que les variations observées ne puissent être imputées aux évolutions physiques du réservoir, liées aux mécanismes de production. Les différents volumes de données sismiques sont caractérisés par un ensemble de paramètres - ou attributs - qui serviront dans le classement des événements sismiques. On étudie alors les variations d'une campagne à l'autre des attributs considérés sur les événements associés à l'ensemble de ces données. Puis on définit un paramètre qui va représenter la variabilité en fonction du temps, et donc de la production, des attributs sismiques considérés. Ce peut être par exemple la différence absolue ou relative, d'attributs sismiques entre les différentes campagnes sismiques, pour chaque échantillon de temps et chaque événement sismique constituant le volume d'analyse des incertitudes de mesure. On décrit alors les caractéristiques statistiques, et la variabilité spatiale de ce paramètre représentant l'incertitude, dans l'objectif de pouvoir l'extrapoler entre la zone d'évaluation des incertitudes et la zone réservoir. Par exemple, en cas de stationnarité verticale de l'incertitude, on pourra estimer que l'erreur de mesure sismique à l'intérieur du réservoir est également stationnaire verticalement, et que la moyenne verticale calculée sur la zone d'évaluation des incertitudes est représentative de la moyenne verticale de cette même erreur au niveau du réservoir.

## II - Définition des classes d'apprentissage

La deuxième étape est une étape de définition des classes d'apprentissage à utiliser dans l'analyse discriminante. Cette étape se fait en indiquant, parmi l'ensemble des campagnes, les événements sismiques censés être représentatifs des différentes classes du réservoir étudié.

Différentes méthodes peuvent être utilisées à cet effet. On va en citer deux à titre d'exemples.

Une première possibilité est d'extraire les événements sismiques enregistrés au voisinage de puits, et dont l'interprétation géologique - ainsi que l'évolution au cours du temps de cette interprétation - a été effectuée. Cette méthodologie permettra alors de classer l'ensemble des traces sismiques en fonction de variations géologiques observées au niveau des puits. Une deuxième possibilité pourrait être d'utiliser les variations présumées des états physiques du réservoir, obtenues par exemple avec un modèle de simulation d'écoulement et de production, et d'extraire les événements sismiques d'apprentissage dans les zones les plus représentatives de ces états supposés. Une autre possibilité est d'effectuer une classification non supervisée des événements sismiques des différentes campagnes aux différentes époques, et d'utiliser les classes ainsi formées comme classes d'apprentissage dans l'analyse discriminante floue.

**III - Calibration d'une fonction de classement floue**

La troisième étape consiste à calibrer par analyse discriminante floue une fonction de classement floue à partir des événements sismiques sélectionnés à l'étape précédente pour représenter les classes d'objets considérées, et des incertitudes qui leur sont attachées, estimées à l'étape 1. A cet effet, on applique sur les données incertaines, la méthode utilisée décrite dans la demande de brevet FR 2813959 précitée, que l'on va rappeler ci-après pour la clarté de la description.

Dans ses grandes lignes, cette méthode comporte la construction d'une fonction qui permet de classer des objets dans des catégories prédéfinies. Cette fonction s'élabore à partir des caractéristiques statistiques des attributs décrivant des objets déjà reconnus (c'est-à-dire pour lesquels la catégorie d'appartenance est connue), qui forment un ensemble d'apprentissage. La fonction de classement ainsi construite est basée sur le calcul des probabilités d'appartenance des objets aux différentes classes, compte tenu des mesures de p attributs disponibles sur ces objets. On peut par exemple décider d'affecter l'objet à la catégorie pour laquelle sa probabilité d'appartenance est la plus probable. Les incertitudes sur les attributs sont prises en compte sous la forme d'un intervalle de variation possible de la mesure de chaque attribut sur un certain objet. Il s'agit de propager ces intervalles possibles, pour les valeurs des différentes mesures, dans le calcul des probabilités de classement. Pour chaque catégorie considérée, on obtient alors, non pas une probabilité de classement de l'objet dans celle-ci, mais un intervalle de probabilité. L'objet peut alors être attribué dès qu'un de ces intervalles de probabilité dépasse les autres. L'analyse de ces intervalles de probabilité permet aussi d'évaluer la qualité de la prédiction des catégories d'apprentissage, ainsi que le degré de séparation de ces catégories apporté par les attributs, tout en intégrant l'incertitude sur les mesures expérimentales de ces attributs.

Cette méthode d'analyse discriminante floue repose sur une application particulière du concept d'arithmétique d'intervalles qui va être décrit ci-après à titre de rappel, pour faciliter la compréhension.

A cet effet, on utilise la technique dite d'arithmétique d'intervalles, décrite dans le document précité : Moore R.E. 1969, qui permet d'étendre les opérateurs mathématiques habituels aux calculs sur des intervalles. L'objectif en est de fournir un encadrement garanti des résultats compte tenu des intervalles d'entrée. Ainsi, les règles (1) ci-après définissent l'extension des opérations arithmétiques à deux intervalles $\boldsymbol{x}=[x^- ; x^+]$ et $\boldsymbol{y}=[y^- ; y^+]$.

$$\begin{cases} \boldsymbol{x} + \boldsymbol{y} = \left[ x^- + y^- \; ; \; x^+ + y^+ \right] \\ \boldsymbol{x} - \boldsymbol{y} = \left[ x^- - y^+ \; ; \; x^+ - y^- \right] \\ \boldsymbol{x}.\boldsymbol{y} = \left[ Min\{ x^-.y^- \; ; \; x^-.y^+ \; ; \; x^+.y^- \; ; \; x^+.y^+ \}; \; Max\{ x^-.y^- \; ; \; x^-.y^+ \; ; \; x^+.y^- \; ; \; x^+.y^+ \} \right] \\ \dfrac{1}{\boldsymbol{x}} = \left[ \dfrac{1}{x^+} \; ; \; \dfrac{1}{x^-} \right] \\ \dfrac{\boldsymbol{x}}{\boldsymbol{y}} = \boldsymbol{x}.\dfrac{1}{\boldsymbol{y}} \end{cases}$$

$$(1)$$

Pour une fonction quelconque f, l'équation (2) définit son extension aux intervalles, appelée fonction d'inclusion $f_{[]}$.

$$f_{[\,]}(x) \supseteq \{y = f(x) | \ x \in x\} \tag{2}$$

Obtenir ces fonctions d'inclusion ne pose généralement pas de problème. Parmi celles-ci, la fonction d'inclusion naturelle est construite en utilisant uniquement les règles de calcul (1) et quelques définitions complémentaires concernant les fonctions élémentaires. Par exemple, l'équation (3) définit l'extension de l'exponentielle :

$$exp_{[\,]}(x) = \left[\exp\left(x^-\right); \exp\left(x^+\right)\right] \tag{3}$$

Néanmoins, les fonctions d'inclusion naturelle ne sont généralement pas optimales, dans le sens où l'inclusion (2) n'est pas une égalité. L'objectif de l'arithmétique d'intervalles est alors de générer une fonction d'inclusion dont les bornes soient restreintes autant que possible.
Pour compléter ces définitions de base, on définit une extension des opérateurs de comparaison aux intervalles [équation (4)].

$$x > y \Leftrightarrow x^- > y^+ \tag{4}$$

Il est à noter que cette dernière définition permet de comparer des intervalles disjoints. Des intervalles se chevauchant sont dits indissociables.
Les concepts de l'arithmétique d'intervalles sont appliqués dans la méthode d'analyse discriminante floue pour encadrer des objets probabilistes. Or, des intervalles de probabilité ne peuvent vérifier strictement les axiomes dits de Kolmogorov et définissant une probabilité et publiés dans la référence précitée de Kolmogorov, (1950). Il est donc nécessaire de généraliser la théorie des probabilités aux intervalles. Cette généralisation est exposée par Walley dans la publication précitée, sous le nom de théorie des probabilités imprécises. On rappelle ci-après les deux axiomes principaux que doit vérifier une probabilité imprécise $p_{[\,]}$.

- $p_{[\,]}$ est une mesure définie positive ; c'est-à-dire que pour tout événement A,

$$0 \leq p_{[\,]}^-(A) \leq p_{[\,]}^+(A) \leq 1 \ ; \tag{5}$$

- $p_{[\,]}$ vérifie un axiome de cohérence ; c'est-à-dire que pour tout ensemble d'événements indépendants $A_i$, il existe une fonction p définie sur cet ensemble d'événements, vérifiant les axiomes de Kolmogorov, et telle que pour tous les $A_i$,

$$p_{[\,]}^-(A_i) \leq p(A_i) \leq p_{[\,]}^+(A_i). \tag{6}$$

La méthode de reconnaissance d'objets qui va être décrite ci-après s'apparente dans ses grandes lignes, avec un algorithme d'analyse discriminante.
Dans ce qui suit, on note $C_i$ l'une des N catégories prédéfinies. Le $j^{\text{ème}}$ intervalle d'apprentissage de la classe $C_i$, constitué d'un vecteur de p intervalles de mesures, est noté $x_{ij} = (x_{ij}^{(1)} \ ; \ ... \ ; \ x_{ij}^{(k)} \ ; \ ... \ ; \ x_{ij}^{(p)})$. L'intervalle courant de l'espace attribut est noté $x = (x^{(1)} \ ; \ ... \ ; \ x^{(k)} \ ; \ ... \ ; \ x^{(p)})$. Enfin, $x^c$ désigne le centre d'un intervalle $x$ quelconque.
Les étapes de l'algorithme de reconnaissance d'objets sont :

III - 1 Calcul des densités de probabilité conditionnelles $p_{[\,]}(x | Ci)$

L'estimation de la densité de probabilité peut se faire en utilisant soit une méthode non paramétrique, soit une méthode paramétrique. Dans le premier cas, l'avantage de la méthode est de permettre une meilleure identification de la structure de chaque classe d'apprentissage $C_i$. Néanmoins, son emploi requiert que la taille de la classe d'apprentissage $C_i$ soit suffisante pour permettre une identification fiable de cette structure. Dans le cas contraire, il est nécessaire de faire une hypothèse sur la structure de la classe d'apprentissage $C_i$. Cela revient à supposer que cette classe suit une loi de distribution prédéfinie, par exemple gaussienne [Equation (7)] :

$$p(x / C_i) = \frac{1}{(2\pi)^{P/2} |\Sigma|^{1/2}} e^{-\frac{1}{2}(x-\mu)^t \Sigma^{-1}(x-\mu)} \qquad (7)$$

où $\mu$ désigne le centre d'inertie de la classe d'apprentissage $C_i$, et $\Sigma$, sa matrice de variance-covariance, caractéristique de sa dispersion.

Nous décrivons successivement les extensions de la méthode non paramétrique pour estimer la densité de probabilité, puis de la méthode paramétrique gaussienne [Equation (7)].

III -1-a. Méthode non paramétrique

Dans la méthode non paramétrique, non estimons la densité conditionnelle, par exemple par la méthode des noyaux. Il s'agit alors d'appliquer aux intervalles, la formule de calcul de la fonction de densité de probabilité conditionnelle par la méthode des noyaux d'Epanechnikov décrite dans la référence précitée :

$$p_{[\ ]}(x | C_i) = \frac{1}{n_i h^p} \sum_{j=1}^{n_i} K_{[\ ]}\left(\frac{x - x_{ij}}{h}\right), \qquad (8)$$

où h désigne la largeur de la bande passante du noyau, $n_i$ la taille de la classe d'apprentissage $C_i$. Le noyau s'écrit :

$$K_{[\ ]}\left(\frac{x - x_{ij}}{h}\right) = \begin{cases} \frac{1}{2N_p}(p+2)\left(1 - \frac{\sum_{k=1}^{p}\left(x^{(k)} - x_{ij}^{(k)}\right)^2}{h^2}\right) & \text{si } |x - x_{ij}| < h \\ 0 \text{ autrement} \end{cases} \qquad (9)$$

Chaque terme quadratique de la somme est indépendant des autres. On donne ici l'expression des bornes inférieure et supérieure de ces termes $Q = (x^{(k)} - x^{(k)}_{ij})/h^2$.

$$Q^- = \begin{cases} \begin{cases} \dfrac{\left(x^{c(k)} - x_{ij}^{(k)-}\right)^2}{h^2} & si \ x_{ij}^{(k)c} \le x^{(k)c} \le x_{ij}^{(k)-} - \left(x^{(k)c} - x^{(k)-}\right) + h \\[4mm] \dfrac{\left(x^{c(k)} - x_{ij}^{(k)+}\right)^2}{h^2} & si \ x_{ij}^{(k)+} - \left(x^{(k)+} - x^{(k)c}\right) - h \le x^{(k)c} \le x_{ij}^{(k)c} \\[4mm] 1 \ autrement \end{cases} \\[15mm] \begin{cases} \dfrac{\left(x_{ij}^{(k)-} - x^{(k)-}\right)^2}{h^2} & si \ x_{ij}^{(k)-} - \left(x^{(k)c} - x^{(k)-}\right) - h \le x^{(k)c} \le x_{ij}^{(k)-} - \left(x^{(k)c} - x^{(k)-}\right) \\[4mm] 0 \ si \ x_{ij}^{(k)-} - \left(x^{(k)c} - x^{(k)-}\right) \le x^{(k)c} \le x_{ij}^{(k)+} + \left(x^{(k)+} - x^{(k)c}\right) \\[4mm] \dfrac{\left(x^{(k)+} - x_{ij}^{(k)+}\right)^2}{h^2} & si \ x_{ij}^{(k)+} + \left(x^{(k)+} - x^{(k)c}\right) \le x^{(k)c} \le x_{ij}^{(k)+} - \left(x^{(k)+} - x^{(k)c}\right) + h \\[4mm] 1 \ autrement \end{cases} \end{cases}$$

$$Q^+ = \begin{cases} \cdots \end{cases}$$

$$(10)$$

On ferait un calcul équivalent si on utilisait un autre estimateur non paramétrique de la densité conditionnelle, comme l'estimateur des k plus proches voisins.

III - 1-b. <u>Méthode paramétrique</u>

L'extension de l'équation (7) peut se faire théoriquement à l'aide des règles de calcul (1), mais leur utilisation directe conduit à surestimer les intervalles de variation des densités de probabilités de l'équation (11).

$$p_{[\ ]}\left(x_{[\ ]} / C_i\right) = \dfrac{1}{(2\pi)^{P/2} \left|\Sigma_{[\ ]}\right|^{1/2}} e^{-\frac{1}{2}\left(x_{[\ ]} - \mu_{[\ ]}\right)^t \Sigma_{[\ ]}^{-1} \left(x_{[\ ]} - \mu_{[\ ]}\right)} \qquad (11)$$

L'algorithme de calcul proposé ici améliore l'encadrement que pourrait obtenir l'application des règles de calcul (1). Les différentes étapes en sont :

*Calcul des intervalles de variations des paramètres* $\mu$ *et* $\Sigma$ *de la loi gaussienne (11)*

Ce calcul consiste à trouver le minimum et le maximum de chaque terme de la matrice $\Sigma$ quand les points $x_{ij}$ de la classe d'apprentissage $C_i$ varient dans leur intervalles de valeurs possibles $x_{ij}$. Il s'effectue en utilisant une méthode d'optimisation sous contrainte, comme la méthode du gradient projeté.

$$\begin{cases} \Sigma_{kl}^{-} = \min_{x_{ij} \in x_{ij}, \forall j} \left\{ \sum_{j} \left(x_{ij}^{(k)} - \mu_i^{(k)}\right)\left(x_{ij}^{(l)} - \mu_i^{(l)}\right) \right\} \\ \Sigma_{kl}^{+} = \max_{x_{ij} \in x_{ij}, \forall j} \left\{ \sum_{j} \left(x_{ij}^{(k)} - \mu_i^{(k)}\right)\left(x_{ij}^{(l)} - \mu_i^{(l)}\right) \right\} \end{cases} \quad \forall (k,l) = 1...p \qquad (12)$$

*Diagonalisation de la matrice par intervalles $\Sigma_{[\,]}$*

Cette étape consiste à encadrer la matrice par intervalles $\Sigma_{[\,]}$ par une matrice $\Sigma^*_{[\,]}$ qui lui est similaire, mais qui soit diagonale. En d'autres termes, il faut que $\Sigma^*_{[\,]}$ vérifie l'équation (13) :

$$\Sigma^*_{[\,]} \supseteq R_\theta^t \Sigma_{[\,]} R_\theta \qquad (13)$$

où $R_\theta$ est une matrice de rotation.

Dans un premier temps, nous modifions la matrice $\Sigma_{[\,]}$ en cherchant à la transformer en une matrice $\Sigma'_{[\,]} = R_\theta^t \Sigma_{[\,]} R_\theta$ dont les termes hors diagonale varient dans des intervalles aussi petits que possible. Pour cela, la méthode de Jacobi-intervalles est utilisée. Dans un second temps, nous remplaçons les intervalles hors de la diagonale de $\Sigma'_{[\,]}$ par 0. Cette opération conduit nécessairement à une augmentation de la taille des intervalles de variation des termes diagonaux de $\Sigma'_{[\,]}$.

En résumé, à l'issue de cette seconde étape, nous avons trouvé un encadrement de la matrice $\Sigma_{[\,]}$ sous la forme d'une matrice $\Sigma^*_{[\,]}$, et nous nous sommes donc affranchis des problèmes de répétition d'intervalles. Néanmoins, l'utilisation directe de la matrice $\Sigma^*_{[\,]}$ dans l'équation (11) conduit encore à surestimer les intervalles variation des densités de probabilité conditionnelles.

*Optimisation des intervalles de variation des densités de probabilité conditionnelles*

Pour mieux encadrer l'intervalle de variations des densités de probabilité conditionnelles, nous divisons le domaine de variation de $\mu$, en $n_s$ sous-domaines $\mu_{k[\,]}$ de façon régulière. Sur chaque sous-pavé $\mu_{k[\,]}$ ainsi formé, nous appliquons les règles de l'arithmétique d'intervalle (1). Cette opération fournit une fonction par intervalles $p_{k[\,]}(x/Ci)$. Après avoir formé les $n_s$ fonctions par intervalles, nous calculons la fonction $p_{[\,]}(x/Ci)$, réunion de toutes les fonctions par intervalles $p_{k[\,]}(x_{[\,]}/Ci)$ précédemment formées :

$$p_{[\,]}(x/C_i) = \bigcup_k p_{k[\,]}(x/C_i) \qquad (14)$$

La fonction $p_{[\,]}(x_{[\,]}/C_i)$ ainsi calculée est un encadrement garanti des intervalles de variation de la densité de probabilité conditionnelle, mais dont les bornes sont meilleures que si le sous-pavage n'avait pas été effectué.

Après avoir calculé les intervalles de variation des densités de probabilité conditionnelles, nous calculons les probabilités *a posteriori* $p_{[\,]}(C_i \mid x)$.

### III - 2 - Calcul des probabilités a posteriori $p_{[\,]}(C_i \mid x)$

Par cette étape, on applique aux intervalles la règle de Bayes bien connue en statistiques :

$$p_{[\ ]}(C_i \mid x) = \frac{p(x \mid C_i).p(C_i)}{\sum_{l=1}^{p} p(x \mid C_l).p(C_l)} \qquad (15)$$

En transformant l'équation précédente et en appliquant les règles (1), on obtient l'expression optimale ci-après des probabilités *a posteriori* :

$$p_{[\ ]}(C_i \mid x) = \left[ \left( 1 + \sum_{l \neq i} \frac{p^+(x \mid C_l) p^+(C_l)}{p^-(x \mid C_l) p^-(C_l)} \right)^{-1} ; \left( 1 + \sum_{l \neq i} \frac{p^-(x \mid C_l) p^-(C_l)}{p^+(x \mid C_l) p^+(C_l)} \right)^{-1} \right]$$

$$(16)$$

Ces probabilités par intervalles vérifient les axiomes des probabilités imprécises.

### III - 3 - Classement de l'intervalle *x* dans la ou les classes les plus vraisemblables.

Le mode de classement que l'on utilise est une extension de la règle du maximum de vraisemblance. Ceci consiste à comparer les différents intervalles de probabilité *a posteriori* $p_{[]}(C_i \mid x)$. On ordonne donc dans un premier temps les différents intervalles par ordre décroissant de $p^+(C_i \mid x)$, ou ce qui est équivalent, par ordre décroissant des quantités $p^+(x \mid C_i) p^+(C_i)$ :

$$p^+(x \mid C_{i1}) p^+(C_{i1}) \geq p^+(x \mid C_{i2}) p^+(C_{i2}) \geq \ldots \geq p^+(x \mid C_{iN}) p^+(C_{iN}) \qquad (17)$$

Alors, par application de la règle de comparaison sur les intervalles, il vient que si les intervalles $p_{[]}(C_{i1} \mid x)$ et $p_{[]}(C_{i2} \mid x)$ sont disjoints (p - ($C_{i1} \mid x$) ≥ $p^+$ ($C_{i2} \mid x$)), l'intervalle *x* est attribué à la classe $C_{i1}$. Dans le cas contraire, l'algorithme ne peut distinguer les classes $C_{i1}$ et $C_{i2}$ en *x*. Le test de comparaison précédent est alors répété entre les classes $C_{i1}$ et $C_{i3}$, ..., $C_{il}$ jusqu'à ce que les intervalles $p_{[]}(x \mid C_{i1}).p_{[]}(C_{i1})$ et $p_{[]}(x \mid C_{il}).P_{[]}(C_{il})$ soient disjoints.
Cette étape a permis de calibrer sur les classes d'apprentissage une fonction de classement intégrant les incertitudes de mesure.

### IV - Classement des événements sismiques

Enfin, une fois cette fonction de classement imprécise calibrée, elle est utilisée pour classer les événements sismiques - imprécis eux aussi - de l'ensemble des campagnes. Pour chaque événement sismique imprécis considéré, on calcule l'intervalle de variations possibles de la probabilité d'affectation à chacune des classes. En fonction de l'importance relative de ces différents intervalles, et notamment, en fonction de leur éventuel recouvrement, on affecte l'événement sismique à un ensemble de classes compatible avec les attributs mesurés et les incertitudes qui leur sont attachées.

### V - Applications

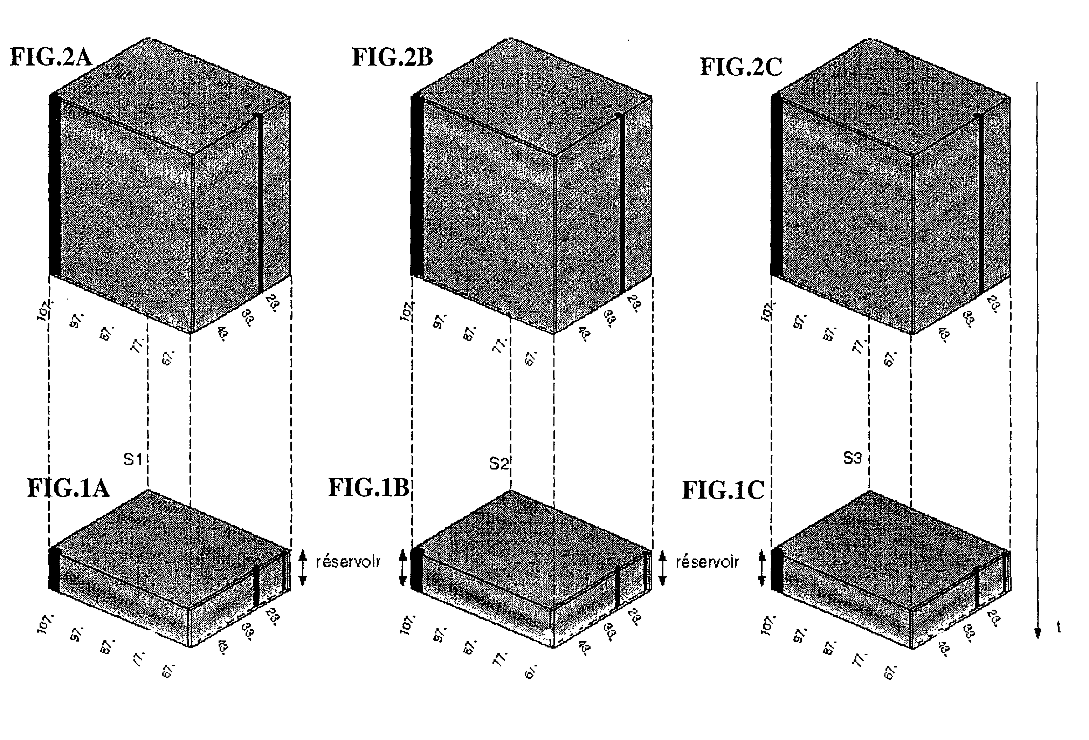

Afin de suivre les modifications physiques au niveau du réservoir liées aux mécanismes de production, trois campagnes sismiques ont été enregistrées : la première avant la mise en production d'un réservoir, et les deux autres, plusieurs mois après le début de la production. Ces modifications sont analysées au niveau d'une fenêtre temporelle constante représentée sur les Fig.1a à 1c. Les événements sismiques analysés sont les morceaux de trace sismique qui peuvent être extraits de chacun de ces volumes de données, et les attributs utilisés pour les représenter sont les amplitudes échantillonnées sur 11 pas de temps successifs inclus dans la fenêtre réservoir.

Afin d'estimer les incertitudes liées au manque de reproductibilité des données, nous avons également extrait des trois enregistrements sismiques une fenêtre temporelle située largement au-dessus du réservoir, mais dans la zone ayant subi le retraitement préalable à l'interprétation (Fig. 2a à 2c). Les variations de mesure des amplitudes observées sur cette zone ne sont pas liées aux mécanismes de production.

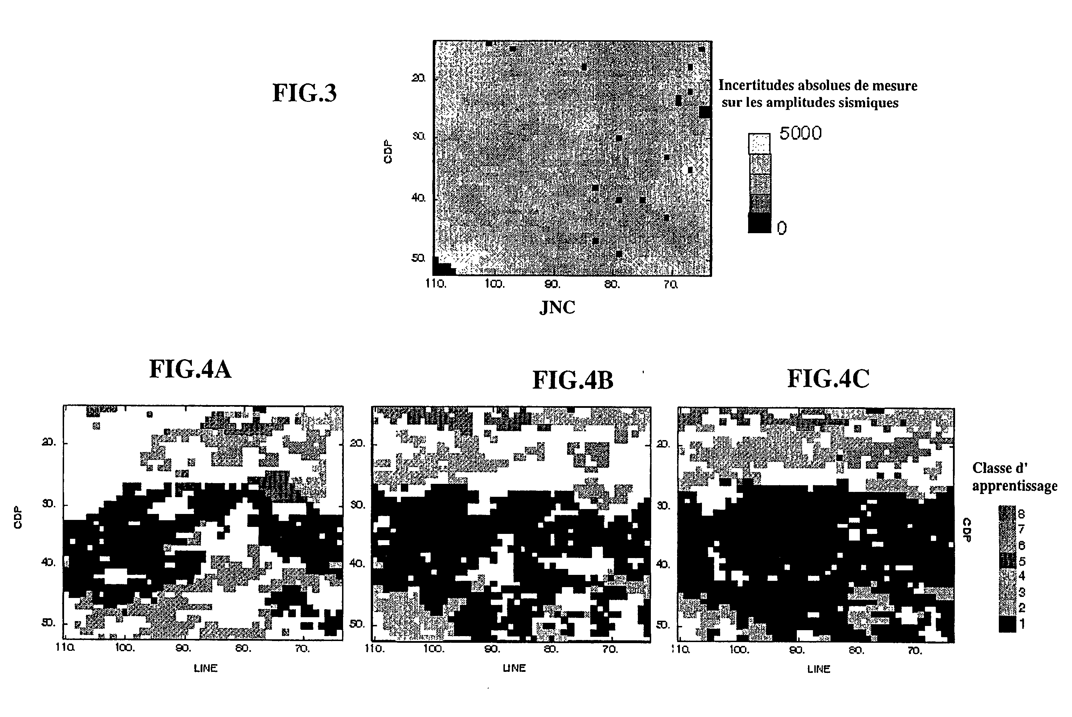

Les variations entre les trois Fig.2a à 2c sont synthétisées à la Fig.3, qui représente la moyenne verticale de la variation maximale des amplitudes sismiques entre les différentes campagnes, et pour chaque événement sismique. Dans l'exemple illustratif traité, cette Fig.3 est considérée comme représentant l'incertitude de mesure, stationnaire verticalement, sur chaque amplitude sismique pour tout le bloc de données (et donc, y compris au niveau de la fenêtre réservoir). Cette incertitude varie latéralement comme l'illustre la carte de la Fig.3 (non stationnarité horizontale).

Une fois les incertitudes de mesure évaluées, les classes sont définies, à partir de l'analyse des pics de la fonction de densité de probabilité multivariée calculée sur l'ensemble des traces sismiques des trois campagnes. Les traces sismiques de plus fortes densité de probabilité formant ces pics sont alors sélectionnées pour réaliser l'apprentissage de la fonction de classement. La Fig. 4 montre la répartition spatiale sur les trois campagnes de ces traces sismiques d'apprentissage.

A partir des traces sismiques d'apprentissage de la Fig.4, affectées d'une incertitude de mesure représentée à la Fig.3, on calibre alors une fonction de classement imprécise.

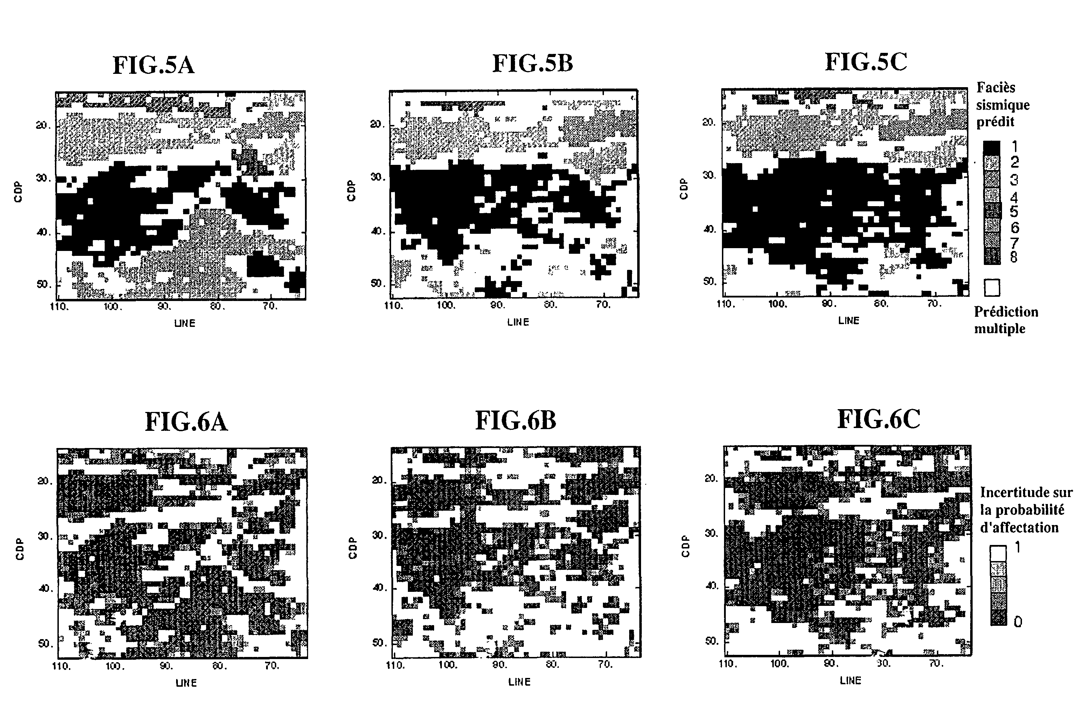

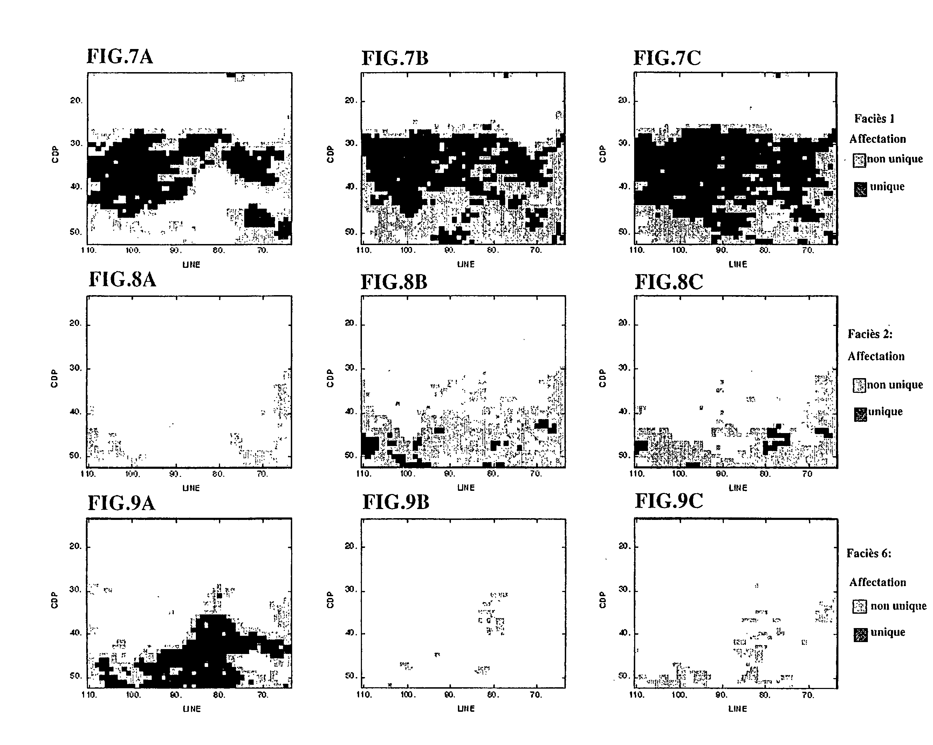

Cette fonction est dans une dernière étape appliquée pour interpréter la modification de la répartition spatiale des classes d'objets précédemment définies au niveau du réservoir. Ces modifications seront par la suite interprétées comme des changement physiques, liés aux mécanismes de production. Les Fig.5a à 5c représentent pour chacune des campagnes les affectations dites stables, c'est à dire les événements sismiques pour lesquels l'incertitude de mesure n'a pas d'impact sur le résultat du classement. Ce sont tous les points qui ne sont pas codés en blanc. Globalement, la majorité des événements sismiques sont classés de façon stable. Pour ceux-ci, l'incertitude sur la probabilité de classement correspondante est généralement très faible, comme le montrent les Fig.6a à 6c, ce qui renforce le sentiment de fiabilité du classement. Néanmoins, on constate sur Fig.5b et 5c que le classement est incertain - ou non unique - dans la partie sud du réservoir. En regardant plus précisément les cartes d'affectation possible des différents faciès, on constate que ces points sont classés soit dans la classe 1, soit dans la classe 2, comme le montrent les Fig.7b à 7c, ainsi que les Fig. 8b à 8c. Par contre, on constate simultanément la disparition du faciès 6 (Fig.9b et 9c), qui avait été repéré de façon fiable avant la mise en production du réservoir (Fig. 9a). Une interprétation de ce résultat est que le faciès 6 disparaît suite à la mise en production du réservoir, puisque les caractéristiques sismiques des zones où il était représenté évoluent.

### Revendications

**1.** Méthode pour faciliter l'identification des changements au cours du temps de l'état physique d'une première zone d'une formation souterraine, d'après les changements détectables à l'intérieur d'une première fenêtre temporelle sur plusieurs jeux de traces sismiques obtenues respectivement au cours de campagnes sismiques successives, en tenant compte des incertitudes sur un certain nombre d'attributs sismiques descriptifs, par référence à des parties des dites traces des différents jeux enregistrées dans au moins une deuxième fenêtre temporelle correspondant à au moins une deuxième zone de la formation souterraine où ladite formation ne subit aucune variation significative d'état physique au cours des campagnes sismiques successives, dans laquelle on utilise une technique d'analyse discriminante pour classer des événements sismiques repérés sur les traces d'enregistrement, dans des catégories définies, la méthode comprenant :

- la formation d'une base d'apprentissage regroupant des états physiques déjà reconnus et classés en catégories prédéfinies, chacune d'elles étant définie par des attributs de caractéristiques statistiques connues ;

- la construction, par référence à la base d'apprentissage, d'une fonction de classement par une technique d'analyse discriminante, permettant de répartir dans les dites catégories, les différents événements sismiques à classer à partir de mesures disponibles sur un certain nombre d'attributs, cette fonction étant formée en déterminant les probabilités d'appartenance des événements aux différentes catégories en tenant compte d'incertitudes sur les attributs sous la forme d'intervalles de probabilité de largeur variable, et

- l'affectation de chaque événement sismique à au moins une des catégories prédéfinies en fonction de l'importance des intervalles de probabilité ;

- la méthode étant **caractérisée en ce que** les dites incertitudes intervenant dans la construction de la fonction de classement sont des incertitudes traduisant le manque de reproductibilité des attributs sismiques d'une campagne sismique à une autre que l'on obtient par une analyse statistique des variations des attributs des événements sismiques de la deuxième fenêtre temporelle.

**2.** Méthode selon la revendication 1, dans laquelle on forme la base d'apprentissage à partir d'événements sismiques mesurés au voisinage de puits forés au travers de la formation étudiée, en définissant à partir d'elles des classes d'apprentissage correspondant à différentes natures de roche, ou à différents contenus fluides, les différents événements sismiques à classer étant associés à des attributs sismiques couvrant la formation, et, pour lesquels, on évalue la probabilité d'appartenance à chacune des classes d'apprentissage définies, sous la forme d'un intervalle dont les bornes dépendent des dits attributs sismiques et des incertitudes sur ces mêmes attributs, et l'on affecte ces événements sismiques à au moins une des classes d'apprentissage en fonction de l'importance relative de l'intervalle de probabilité associé par rapport à l'ensemble des intervalles de probabilité.

**3.** Méthode selon la revendication 1, **caractérisée en ce que** l'on forme la base d'apprentissage en sélectionnant les traces sismiques dans les parties les plus représentatives des différents états physiques supposés de la première zone, et de leurs variations, obtenus par exemple avec un modèle numérique de simulation d'écoulement et de production.

**4.** Méthode selon la revendication 1, **caractérisée en ce que** l'on forme la base d'apprentissage en fonction des modes de la fonction d'une densité de probabilité multivariée calculée à partir de l'ensemble des événements sismiques **caractérisés par** les attributs retenus.

**5.** Méthode selon l'une des revendications 1 à 4, **caractérisée en ce que** l'on estime les incertitudes sur les attributs sismiques au niveau de la première zone, à partir des variations de la moyenne verticale des variations des attributs sur les différentes campagnes sismiques, dans la dite deuxième fenêtre temporelle.

**6.** Méthode selon les revendications 1 à 4, **caractérisée en ce que** l'on estime les incertitudes sur les attributs sismiques au niveau de la première zone, à partir de simulations stochastiques tridimensionnelles, afin de reproduire au niveau de la première zone, la variabilité spatiale et des caractéristiques statistiques telles que la moyenne et/ou la variance, estimées par l'analyse géostatistique des variations des attributs sur les différentes campagnes sismiques dans la dite deuxième fenêtre temporelle.

**7.** Méthode selon les revendications 1 à 6, selon laquelle on suit l'évolution au cours du temps des états d'un système par télédétection.

**8.** Méthode selon l'une des revendications précédentes, **caractérisée en ce qu'**elle comporte un prétraitement des traces sismiques pour éliminer, sur les parties de traces des jeux de traces successifs, compris dans la deuxième fenêtre temporelle, les différences autres que celles liées aux dits changements dans la forme des dits événements sismiques.

**Claims**

**1.** Method for facilitating identification of changes over time in the physical state of a first zone of a sub-surface formation, from changes detectable within a first time window in a plurality of sets of seismic traces obtained respectively during successive seismic campaigns, taking into account uncertainties pertaining to a certain number of descriptive seismic attributes, by reference to parts of the said traces of the different sets recorded in at least a second time window corresponding to at least a second zone of the sub-surface formation in which the said formation does not undergo any significant variation in physical state in the course of the successive seismic campaigns, in which a discriminating analysis technique is employed to classify seismic events marked on the recorded traces, in defined categories, the method comprising:

- the formation of a learning base grouping physical states already recognised and classified into predefined categories, each of them being defined by attributes of known statistical characteristics;

- the construction, by reference to the learning base, of a function of classification by a discriminating analysis technique, permitting distribution into the said categories of the different seismic events to be classified from available measurements of a certain number of attributes, this function being formed by determining the probabilities of the events belonging to the different categories taking into account uncertainties pertaining to the attributes in the form of probability intervals of variable width, and

- allocation of each seismic event to at least one of the predefined categories as a function of the importance of the probability intervals;

- the method being ***characterised by*** *the fact that* the said uncertainties entering into the construction of the classification function are uncertainties reflecting the lack of reproducibility of the seismic attributes from one seismic campaign to another obtained by statistical analysis of the variations of the attributes of the seismic events of the second time window.

**2.** Method as described in claim 1, in which the learning base is formed from seismic events measured in the vicinity of wells drilled through the formation studied, defining from them learning classes corresponding to different rock natures, or to different fluid contents, the different seismic events to be classified being associated with seismic attributes covering the formation and for which the probability is evaluated of belonging to each of the defined learning classes, in the form of an interval the boundaries of which depend on the said seismic attributes and on the uncertainties pertaining to these same attributes, and these seismic events are allocated to at least one of the learning classes as a function of the relative importance of the associated probability interval relative to all the probability intervals.

**3.** Method as described in claim 1, ***characterised by*** *the fact that* the learning base is formed by selecting the seismic traces from the most representative parts of the supposed different physical states of the first zone, and of their variations, obtained for example with a digital simulation model of flow and production.

**4.** Method as described in claim 1, ***characterised by*** the *fact that* the learning base is formed from the modes of the function of a multivariate probability density calculated from all the seismic events **characterised by** the selected attributes.

**5.** Method as described in one of claims 1 to 4, ***characterised by*** *the fact that* the uncertainties are estimated pertaining to the seismic attributes at the level of the first zone, from variations in the vertical mean of the variations of the attributes over the different seismic campaigns, in the said second time window.

**6.** Method as described in claims 1 to 4, ***characterised by*** *the fact that* the uncertainties are estimated pertaining to the seismic attributes at the level of the first zone, from three-dimensional stochastic simulations, in order to reproduce at the level of the first zone the spatial variability and statistical characteristics such as the mean and/or the variance, estimated by geostatic analysis of the variations of the attributes over the different seismic campaigns in the said second time window.

**7.** Method as described in claims 1 to 6, in accordance with which the evolution of the states of a system is monitored over time by remote sensing.

**8.** Method as described in one of the preceding claims, ***characterised by*** *the fact that* it includes pre-processing of the seismic traces to eliminate the differences other than those linked to the said changes in the form of the said seismic events, in the parts of the traces of the successive sets of traces in the second time window.

**Patentansprüche**

**1.** Verfahren zum Erleichtern der Identifizierung von zeitlichen Änderungen des physikalischen Zustands einer ersten Zone einer unterirdischen Formation nach detektierbaren Änderungen in einem ersten Zeitfenster über mehrere seismische Spurensätze, die jeweils bei aufeinander folgenden seismischen Kampagnen erhalten werden, unter Berücksichtigung der Unsicherheiten über eine bestimmte Anzahl von beschreibenden seismischen Attributen durch Referenz zu Teilen der Spuren verschiedener aufgezeichneter Sätze in wenigstens einem zweiten Zeitfenster, das wenigstens einer zweiten Zone der unterirdischen Formation entspricht, wo die Formation keiner signifikanten physikalischen Zustandsvariation bei aufeinander folgenden seismischen Kampagnen unterliegt, in welchem man eine diskriminierende Analysetechnik anwendet, um die seismischen wiederholten Ereignisse auf den Aufzeichnungsspuren in definierten Kategorien zu klassifizieren, wobei das Verfahren umfasst:

- die Bildung eines Lernfelds (Learning Base), das bereits bekannte und in vordefinierte Kategorien klassifizierte physikalische Zustände gruppiert, wobei jeder von ihnen durch Attribute von gemeinsamen statistischen Merkmalen definiert ist;

- die Konstruktion durch Referenz mit dem Lernfeld (Learning Base) von einer Klassifizierungsfunktion durch eine diskriminierende Analysetechnik, die es erlaubt, in den genannten Kategorien die verschiedenen seismischen, zu klassifizierenden Ereignisse aus verfügbaren Messungen auf eine bestimmte Anzahl von Attributen zu verteilen, wobei diese Funktion unter Bestimmung der Wahrscheinlichkeiten eines Auftretens der Ereignisse bei verschiedenen Kategorien gebildet wird, unter Berücksichtigung von Unsicherheiten bei den Attributen in der Form von Wahrscheinlichkeits-Intervallen variabler Breite, und

- die Zuordnung jedes seismischen Ereignisses zu wenigstens einer der vordefinierten Kategorien in Abhängigkeit der Größe der Wahrscheinlichkeits-Intervalle;

- wobei das Verfahren **dadurch gekennzeichnet ist, dass** die genannten Unsicherheiten, die in der Konstruktion der Klassifizierungsfunktion einwirken, Unsicherheiten sind, die den Mangel an Reproduzierbarkeit der seismischen Attribute von einer seismischen Kampagne zur anderen übertragen, welche man durch statistische Analyse der Variationen der Attribute der seismischen Ereignisse des zweiten Zeitfensters erhält.

2. Verfahren nach Anspruch 1, bei dem man das Lernfeld (Learning Base) aus seismischen Ereignissen bildet, die in der Nähe von Bohrlöchern gemessen werden, die durch die untersuchte Formation gebohrt sind, unter Definition von Lernklassen ausgehend von ihnen, die verschiedenen Felseigenschaften entsprechen oder in verschiedenen enthaltenen Fluiden, wobei die verschiedenen seismischen zu klassifizierenden Ereignisse mit seismischen Attributen verbunden sind, welche die Formation bedecken und für die man die Wahrscheinlichkeit eines Auftretens bei jeder der definierten Lernklassen bewertet, in Form eines Intervalls, dessen Grenzen von den seismischen Attributen und den Unsicherheiten auf denselben Attributen abhängen, und man diese seismischen Ereignisse bei wenigstens einer der Lernklassen in Abhängigkeit der relativen Größe des Wahrscheinlichkeits-Intervalls beeinträchtigt, die mit dem Verhältnis zur Gesamtheit der Wahrscheinlichkeits-Intervalle verbunden ist.

3. Verfahren nach Anspruch 1, **dadurch gekennzeichnet, dass** man das Lernfeld (Learning Base) unter Auswahl von seismischen Spuren in denjenigen Teilen bildet, die am repräsentativsten für die verschiedenen von der Zone angenommenen physikalischen Zustände sind und deren Variationen, die zum Beispiel mit einem numerischen Modell zur Simulation eines Flusses oder einer Produktion erhalten werden.

4. Verfahren nach Anspruch 1, **dadurch gekennzeichnet, dass** mit dem Lernfeld (Learning Base) in Abhängigkeit der Arten der Funktion einer mehrfach variablen Wahrscheinlichkeitsdichte bildet, die aus der Gesamtheit von seismischen Ereignissen berechnet wird, die durch gespeicherte Attribute **gekennzeichnet** sind.

5. Verfahren nach einem der Ansprüche 1 bis 4, **dadurch gekennzeichnet, dass** man die Unsicherheiten auf den seismischen Attributen auf der Ebene der ersten Zone aus Variationen der mittleren Vertikalen der Variationen der Attribute auf den verschiedenen seismischen Kampagnen in dem zweiten Zeitfenster einschätzt.

6. Verfahren nach einem der Ansprüche 1 bis 4, **dadurch gekennzeichnet, dass** man die Unsicherheiten auf den seismischen Attributen auf der Ebene der ersten Zone ausgehend von stochastischen dreidimensionalen Simulationen einschätzt, um auf dem Niveau der ersten Zone die räumliche Variabilität der statistischen Merkmale zu reproduzieren wie der Mittelwert und/oder die Varianz, eingeschätzt durch geostatistische Analyse der Variationen der Attribute auf den verschiedenen seismischen Kampagnen im zweiten Zeitfenster.

7. Verfahren nach einem der Ansprüche 1 bis 6, bei dem man die zeitliche Entwicklung der Zustände des Systems durch Ferndetektion verfolgt.

8. Verfahren nach einem der vorhergehenden Ansprüche, **dadurch gekennzeichnet, dass** es eine Vorbearbeitung der seismischen Spuren umfasst, auf den Teilen von Spuren von aufeinander folgenden Sets von Spuren aus, die in dem zweiten Zeitfenster enthalten sind, die Unterschiede zu entfernen, die verschieden von jenen sind, die mit den Änderungen in der Form der seismischen Ereignisse verbunden sind.

FIG.2A

FIG.2B

FIG.2C

FIG.1A

FIG.1B

FIG.1C

S1

S2

S3

réservoir

réservoir

t

EP 1 255 126 B1

15

FIG.3

Incertitudes absolues de mesure
sur les amplitudes sismiques

CDP

JNC

FIG.4A

FIG.4B

FIG.4C

Classe d'
apprentissage

LINE

EP 1 255 126 B1

FIG.5A  FIG.5B  FIG.5C

FIG.6A  FIG.6B  FIG.6C

FIG.7A  FIG.7B  FIG.7C

FIG.8A  FIG.8B  FIG.8C

FIG.9A  FIG.9B  FIG.9C